Europäisches Patentamt

European Patent Office

Office européen des brevets

(19)

(11) Veröffentlichungsnummer : **0 068 125**
**B1**

(12) **EUROPÄISCHE PATENTSCHRIFT**

(45) Veröffentlichungstag der Patentschrift :
04.03.87

(21) Anmeldenummer : 82104123.3

(22) Anmeldetag : 12.05.82

(51) Int. Cl.⁴ : **G 12 B   9/02,** H 05 K   5/02

(54) **Tragbares Schutzgehäuse für elektrische und elektronische Geräte.**

(30) Priorität : 15.06.81 CH 3922/81

(43) Veröffentlichungstag der Anmeldung :
05.01.83 Patentblatt 83/01

(45) Bekanntmachung des Hinweises auf die Patenterteilung : 04.03.87 Patentblatt 87/10

(84) Benannte Vertragsstaaten :
AT DE FR GB SE

(56) Entgegenhaltungen :
EP-A- 0 001 302
AT-B-   359 558
DE-A- 2 826 292

(73) Patentinhaber : Edak A.G.
Schwertstrasse 1
CH-8200 Schaffhausen (CH)

(72) Erfinder : Sieber, Willy
Kirchweg 66
CH-8245 Feuerthalen (CH)

(74) Vertreter : Willi, Anton, J.
Alsenmattstrasse 2
CH-8800 Thalwil (CH)

Jouve, 18, rue St-Denis, 75001 Paris, France

EP 0 068 125 B1

## Beschreibung

Gegenstand der vorliegenden Erfindung ist ein tragbares Schutzgehäuse für elektrische und elektronische Geräte. Es ist bekannt, solche Geräte, wenn sie z. B. für militärische, Forschungs- oder ähnliche Zwekke bei extremer mechanischer und/oder klimatischer Beanspruchung eingesetzt werden müssen, in spritzwasserdicht abschliessbaren und vibrationsfesten kastenförmigen Gehäusen unterzubringen. Ueblicherweise besitzen diese Schutzgehäuse einen selbsttragenden, kastenförmigen Gehäusemantel mit durch einen Deckel abschliessbarer Frontöffnung, in welchen Gehäusemantel ein an Schwingungsdämpfern aufgehängter Aufnahmerahmen für das durch die Mantelfrontöffnung ein- und ausbaubare Gerät angeordnet ist, wobei ein Randprofil des Mantels einerseits und ein Randprofil des Aufnahmerahmens anderseits je einen Dichtungsring tragen.

In vielen Fällen hat es sich als nachteilig erwiesen, dass zwar die Frontöffnung des Gehäusemantels mittels des Deckels einwandfrei dicht abgeschlossen werden kann, bei abgenommenem Deckel aber, d. h. also bei zur Benützung zugänglichem Gerät, der Mantelinnenraum nicht mehr abgedichtet ist ; da der Tragrahmen seinerseits schon aus Gründen der Gerätekühlung nicht selbst einen dichten Mantel bildet, sondern üblicherweise mit Durchbrechungen versehen ist, ist ein Schutz des Gerätes gegen Witterungseinflüsse, Schmutz etc. nicht mehr gewährleistet.

Erfindungsgemäss wird dieses Problem dadurch gelöst, dass der die Frontöffnung des Gehäusemantels umschliessende erste Dichtungsring und der die Geräteeinschuböffnung des Aufnahmerahmens umschliessende zweite Dichtungsring durch einen den Frontspalt zwischen Gehäusemantel und Aufnahmerahmen dicht abschliessenden und Schwingbewegungen des Aufnahmerahmens durch entsprechende Deformation zulassenden Dichtungsbalg einstückig miteinander verbunden sind.

Der zwischen den beiden als Randwulste des Balges ausgebildeten Dichtungsringen den Frontspalt zwischen Gehäusemantel und Aufnahmerahmen überspannende Dichtungsbalg gewährleistet auch bei abgenommenem Deckel einen dichten Abschluss des Zwischenraumes zwischen Mantel und Rahmen, während der am letzteren fixierte Dichtungsring durch Zusammenwirken mit der das Gerät am Rahmen fixierenden Gerätefrontplatte, die Geräteeinschuböffnung des Rahmens abdichtet.

Um dem Aufnahmerahmen die ihm dank seiner Aufhängung an Schwingungsdämpfern möglichen Bewegungen bzw. Vibrationen gegenüber dem Gehäusemantel nicht zu behindern, besitzt der Dichtungsbalg ein bezüglich des gegenseitigen Abstandes der Dichtungsringe in Ruhelage des Aufnahmerahmens ein genügend grosses Uebermass ; damit wird auch eine örtliche Ueberbeanspruchung des z. B. aus Gummi oder Kunststoff bestehenden Dichtungsbalgs, besonders an den Uebergangsstellen zu den feststehenden Dichtungsringen, auch bei starken Schwingungsausschlägen des Aufnahmerahmens vermieden.

In der beiliegenden Zeichnung ist ein Ausführungsbeispiel der Erfindung dargestellt und im folgenden näher beschrieben. In der Zeichnung zeigt :

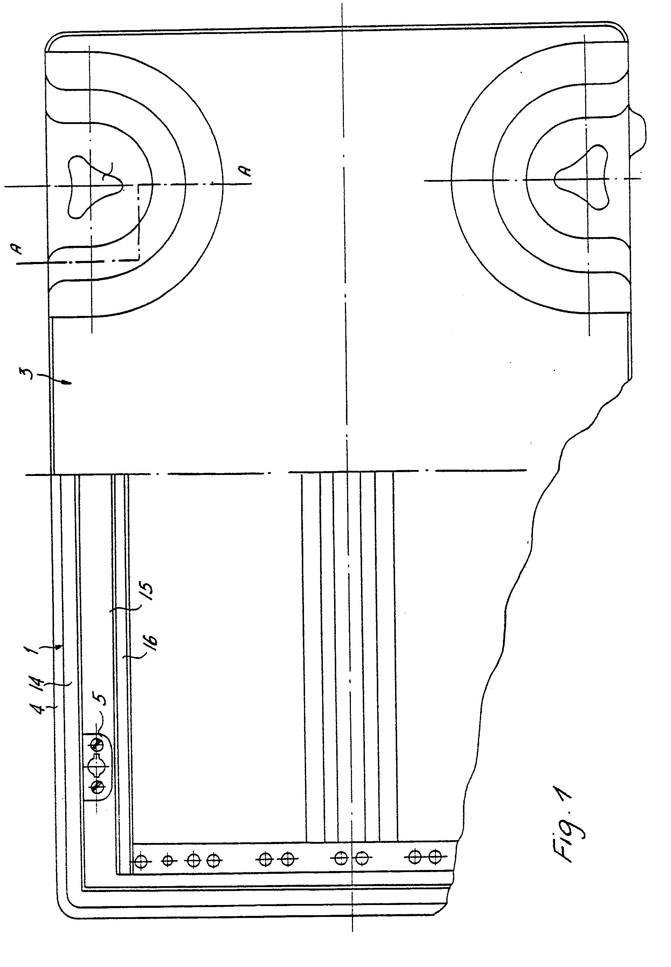

Figur 1 eine Frontansicht des Schutzgehäuses bei teilweise entferntem Deckel,

Figur 2 einen Querschnitt nach Linie A-A in Fig. 1 durch die Frontpartie des Schutzgehäuses (ohne das einzusetzende Gerät),

Figuren 3 und 4 je einen Querschnitt durch eine Längsseite bzw. eine Schmalseite des einstückigen im Grundriss rechteckförmigen Dichtungselementes in seiner Herstellungsform, und

Figuren 5 und 6 in grösserem Massstab je einen Querschnitt analog Fig. 3 bzw. 4 durch den dem Aufnahmerahmen zugeordneten Dichtungsring des Dichtungselementes.

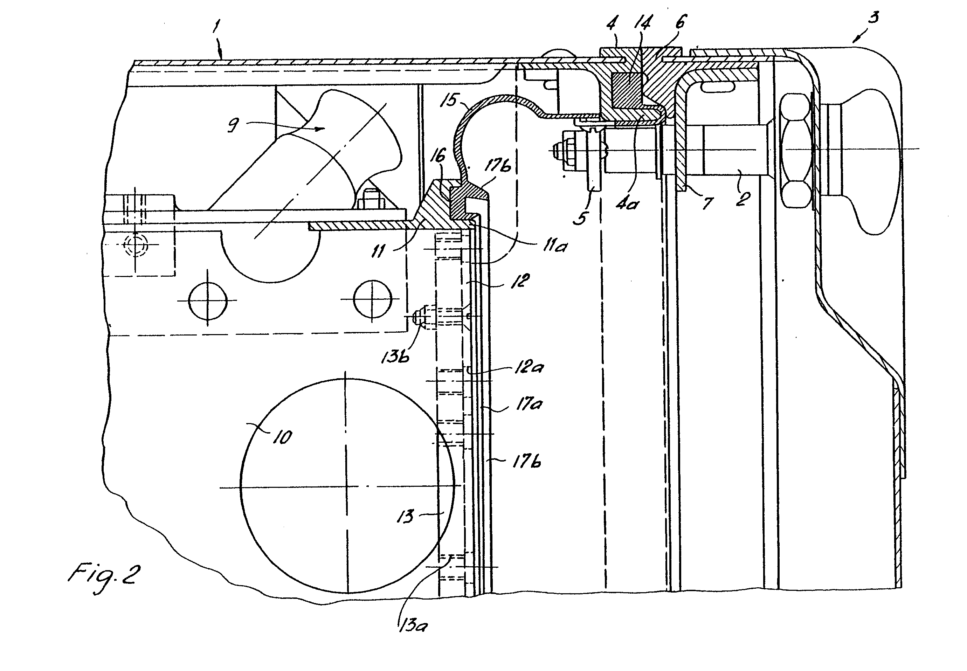

Das gezeichnete Schutzgehäuse besitzt einen kastenförmigen, selbsttragenden Metallmantel 1 mit mittels versenkter Griffbolzen 2 am Mantel fixierbarem Frontdekkel 3. Der Mantel 1 könnte auch rückseitig offen und durch einen Deckel abschliessbar sein. In die Seitenwände des Mantels 1 sind nicht gezeichnete ausklappbare Handgriffe eingelassen und der Mantelboden ist mit Fussrippen versehen. Ein Randprofil 4 des Mantels 1 ist frontseitig mit einer Umfangsnut versehen, die nach innen von einem überstehenden Flansch 4a begrenzt ist. Am Randprofil 4 sind ferner Eingriffsplatten 5 für die Griffbolzen 2 befestigt, die durch an einem Randprofil 6 des Deckels 3 befestigte Winkelplatten 7 hindurch führen. Im Metallmantel 1 und im Wandabstand zu diesem ist mittels acht Schwingungsdämpfern 9 (Fig. 2) ein Aufnahmerahmen 10 aufgehängt. Der bezüglich Aufnahmeraum genormte Aufnahmerahmen 10 ist von seiner gegenüber der Offenseite des Mantels 1 zurückversetzten Frontseite her mit den jeweiligen Einbaugeräten bestückbar. Er besitzt ein Randprofil 11, das an den Längsseiten eine Nut aufweist, die nach innen von einem überstehenden Flansch 11a begrenzt ist ; die einen Flansch 12 bildenden Schmalseiten des Randprofils 11 dagegen sind mit einer Reihe von Löchern 12a versehen. An der Unterseite des Schmalseitenflansches 12 des Randprofils 11 ist mittels Schrauben 13b eine Gewindeleiste 13 befestigt, deren Gewindebohrungen 13a mit den Löchern 12a des Schmalseitenflansches 12 fluchten.

In die Rechteckquerschnitt aufweisende, laufende Nut des Randprofils 4 des Gehäusemantels 1 ist ein Dichtungsring 14 eingepasst und festgeklebt. Dieser Dichtungsring 14 bildet die eine Randwulst eines relativ dünnwandigen Dichtungsbalgs 15, dessen anderer Rand ebenfalls mit einer einen Dichtungsring 16 bildenden Randwulst versehen ist. Die Längsseiten dieses der Form des Aufnahmerahmens 10 angepassten Dichtungsrings 16 sind in die frontseitige Nut des Randprofils 11 des Aufnahmerahmens 10 eingesetzt bzw. eingeklebt und besitzen eine innere und eine äussere Dichtungslippe 17a bzw. 17b. Die höhere äussere und leicht nach innen geneigte Dichtungslippe 17b erstreckt sich über den ganzen Umfang des Dichtungsrings 16, also auch über dessen Schmalseiten. An diesen Schmalseiten übergreift der Dichtungsring 16 mit einer unteren Rinne 18 den freien Rand des Schmalseitenflansches 12 des Randprofils 11 und ist anderseits mittels unterer Zapfen 19 durch die Flanschlöcher 12a hindurch in einem Teil der Bohrungen 13a der Gewindeleiste 13 verankert. Die relativ breite Frontseite dieser schmalseitigen Dichtungsrippenpartien besitzt ausserdem zwei Dreieckquerschnitt aufweisende Rippen 20.

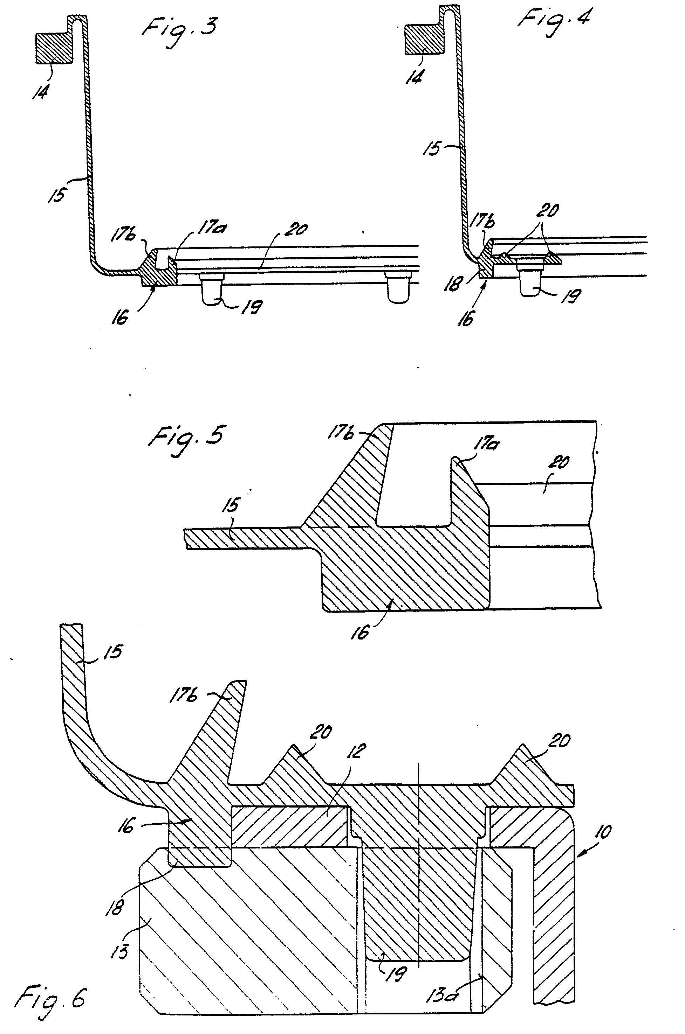

Wie aus Fig. 3 und 4 ersichtlich, wird das einstückige, aus Gummi oder einem geeigneten Kunststoff bestehende Dichtungselement 14, 15, 16 in der Form eines Napfes hergestellt, dessen Bodenöffnung vom Dichtungsring 16, dessen leicht konische Wand vom Balgteil 15 und dessen oberer Rand vom Dichtungsring 14 gebildet werden, wobei die beiden Dichtungsringe 14, 16 ihre Gebrauchslage einnehmen, während der Balgteil 15 in Strecklage erzeugt wird. Nach dem Einsetzen bzw. Einkleben der Ringdichtungen 14 und 16 in die Nut des Randprofils 4 des Mantels 1 bzw. die Nut des Randprofils 11 und auf den Flansch 12 des (seine Ruhelage einnehmenden) Aufnahmerahmens 10 ist der Balgteil 15 leicht ausgebaucht.

Wie aus Fig. 2 ersichtlich, schliesst das einstückige balgartige Dichtungselement 14, 15, 16 den Spaltraum zwischen Gehäusemantel 1 und Aufnahmerahmen 10 einwandfrei nach aussen ab. Nun kann wie üblich das gewünschte Gerät (nicht gezeichnet) in den Aufnahmerahmen 10 eingeschoben und mit dem überstehenden Rand seiner der Normung des Aufnahmerahmens entsprechenden Frontplatte auf dem Dichtungsring 16 allseitig aufliegend mittels Schrauben an der Gewindeleiste 13 fixiert werden. Damit ist nicht nur der Spaltraum zwischen Mantel und Aufnahmerahmen, sondern auch die Einschuböffnung des Aufnahrahmens 10 und somit das eingebaute Gerät einwandfrei nach aussen abgedichtet. Der dank seiner Ueberlänge ausgebauchte Balgteil 15 des einstückigen Dichtungselementes behindert in keiner Weise die infolge der schwingungsdämpfenden Aufhängung des Aufnahmerahmens 10 etwa auftretenden Relativbewegungen von Gehäusemantel 1 und Aufnahmerahmen 10, da diese stets relativ kleinen Bewegungen den Balg an keiner Stelle zu strecken bzw. unzulässig zu dehnen vermögen. Das Gerät ist somit nicht nur bei aufgesetztem Deckel 3 dicht und vibrationsfest im Gehäusemantel 1 untergebracht, sondern auch bei abgenommenem Deckel dank des einstückigen Dichtungselementes 14, 15, 16 gegen Eindringen von Staub, Spritzwasser und dergl. einwandfrei geschützt.

Die Dichtungslippen 17a, 17b und die Dichtungsrippen 20 gewährleisten auch dann ein dichtes Anliegen des Frontplattenrandes des Gerätes, wenn dieser Rand aus Platzgründen wie beim beschriebenen Beispiel nur an den zwei Schmalseiten am Aufnahmerahmen 10 festgeschraubt werden kann.

## Patentansprüche

1. Tragbares Schutzgehäuse für elektrische und elektronische Geräte, welches einen selbsttragenden Gehäusemantel besitzt mit durch einen Deckel abschliessbarer Frontöffnung, in welchem Gehäusemantel ein an Schwingungsdämpfern aufgehängter Aufnahmerahmen für das Gerät angeordnet ist, wobei frontseitig ein Randprofil des Mantels einerseits und ein Randprofil des Aufnahmerahmens anderseits je einen Dichtungsring tragen, dadurch gekennzeichnet, dass der die Frontöffnung des Gehäusemantels (1) umschliessende erste Dichtungsring (14) und der die Geräteeinschuböffnung des Aufnahmerahmens (10) umschliessende zweite Dichtungsring (16) durch einen den Frontspalt zwischen Gehäusemantel und Aufnahmerahmen dicht abschliessenden, und Schwingbewegungen des Aufnahmerahmens durch entsprechende Deformation zulassenden Dichtungsbalg (15) einstückig miteinander verbunden sind.

2. Schutzgehäuse nach Anspruch 1, dadurch gekennzeichnet, dass der die rechteckförmige Frontöffnung des Mantels (1) umschliessende und mit einem Randprofil (6) des Deckels (3) zusammenwirkende Dichtungsring (14) in eine frontseitige Nut des Mantel-Randprofils (4) eingeklebt ist, während der die entsprechend rechteckförmige Offenseite des Aufnahmerahmens (10) umschliessende Dichtungsring (16) an den Längsseiten des Rahmen-Randprofils (11) in eine Nut eingeklebt und an den Schmalseiten dieses Randprofils mittels einer Reihe einstückig an ihm vorgesehener Zapfen (19) durch Löcher (12a) in einem Randflansch (12) des Rahmens (10) hindurch in einer darunter liegenden Gewindeleiste (13) verankert ist.

3. Schutzgehäuse nach Anspruch 2, dadurch gekennzeichnet, dass die Länge des Balges (15) grösser ist als das Mass, um welches der innere Dichtungsring (16) gegenüber dem äusseren Dichtungsring (14) zurückgesetzt ist, wobei der Balg (15) entsprechend diesem Uebermass ausgebaucht ist, um durch die schwingungsdämpfende Aufhängung des Aufnahmerahmens (10) ermöglichte Relativbewegungen zwischen Mantel und Rahmen nicht zu behindern.

4. Schutzgehäuse nach Anspruch 3, dadurch gekennzeichnet, dass der innere Dichtungsring (16) frontseitig eine äussere umlaufende, nach innen geneigte Dichtungslippe (17b) aufweist, wobei an den Längsseiten im Abstand von dieser äusseren Dichtungslippe (17b) eine innere Dichtungslippe (17a) geringerer Höhe und an den Schmalseiten zwei im gegenseitigen Abstand parallel zueinander verlaufende Dichtungsrippen (20) mit Dreieckquerschnitt vorgesehen sind.

### Claims

1. Portable protective case for electrical and electronic apparatus, which has a self-supporting casing with a front aperture closable by means of a cover, in which casing is situated a reception frame for the apparatus which is suspended from vibration dampers, an edge section of the jacket on the one hand and an edge section of the reception frame on the other hand each carrying a sealing ring at the front, characterised in that the first sealing ring (14) encircling the front aperture of the casing (1) and the second sealing ring (16) encircling the instrument insertion aperture of the reception frame (10) are interconnected into one unit by means of a sealing bellows (15) which hermetically closes off the front gap between the casing and the reception frame and allows oscillatory displacements of the reception frame by commensurate deformation.

2. Protective case according to claim 1, characterised in that the sealing ring (14) encircling the rectangular front aperture of the casing (1) and co-operating with an edge section (6) of the cover (3) is glued into a front-side groove of the jacket edge section (4), whereas the sealing ring (16) encircling the correspondingly rectangular open side of the reception frame (10) is glued into a groove on the longitudinal sides of the frame edge section (11) and is anchored on the narrow sides of this edge section by means of, a row of studs (19) integrally provided on the same, through holes (12a) present in a marginal flange (12) of the frame (10), in underlying screw bar (13).

3. Protective case according to claim 2, characterised in that the length of the bellows (15) is greater than the distance by which the inner sealing ring (16) is set back with respect to the outer sealing ring (14), the bellows (15) bulging outwardly commensurately with this greater dimension so that it does not obstruct relative displacements between the jacket and frame rendered possible by the vibration-damping suspension of the reception frame (10).

4. Protective case according to claim 3, characterised in that the inner sealing ring (16) is provided at the front with an encircling external and inwardly sloping sealing lip (17b), an inner sealing lip (17a) of lesser height being situated on the longitudinal sides at a distance from this outer sealing lip (17b), and two sealing fins (20) of triangular cross-section and extending parallel to each other with mutual spacing being provided on the narrow sides.

### Revendications

1. Boîtier protecteur portatif pour appareils électriques et électroniques, présentant une enveloppe de boîtier autoporteuse percée d'une ouverture frontale obturable par un couvercle, enveloppe de boîtier dans laquelle se trouve un cadre récepteur de l'appareil, suspendu à des amortisseurs de vibrations, d'une part un profil marginal de l'enveloppe et, d'autre part, un profil marginal du cadre récepteur portant une bague d'étanchement respective à leur face frontale, boîtier caractérisé par le fait que la première bague d'étanchement (14) entourant l'ouverture frontale de l'enveloppe (1) du boîtier et la seconde bague d'étanchement (16) entourant l'ouverture du cadre récepteur (10) permettant l'insertion de l'appareil sont reliées l'une à l'autre, d'un seul tenant, par l'intermédiaire d'un soufflet d'étanchement (15) qui obture hermétiquement l'interstice frontal entre l'enveloppe du boîtier et le cadre récepteur et qui autorise, par une déformation correspondante, des mouvements vibratoires dudit cadre récepteur.

2. Boîtier protecteur selon la revendication 1, caractérisé par le fait que la bague d'étanchement (14), entourant l'ouverture frontale rectangulaire de l'enveloppe (1) et coopérant avec un profil marginal (6) du couvercle (3), est collée dans une gorge pratiquée à la face frontale du profil marginal (4) de l'enveloppe, tandis que la bague d'étanchement (16) qui entoure la face ouverte, de forme rectangulaire correspondante, du cadre récepteur (10) est collée dans une gorge ménagée sur les côtés longitudinaux du profil marginal (11) du cadre et est ancrée dans une barrette filetée sous-jacente (13), sur les petits côtés de ce profil marginal, au moyen d'une série de tenons (19) qui en sont solidaires d'un seul tenant, en franchissant de part en part des trous (12a) percés dans une aile marginale (12) du cadre (10).

3. Boîtier protecteur selon la revendication 2, caractérisé par le fait que la longueur du soufflet (15) excède la valeur dont la bague d'étanchement intérieure (16) accuse un retrait par rapport à la bague d'étanchement extérieure (14), le soufflet (15) étant bombé d'une manière correspondant à ce surdimensionnement, de manière à ne pas empêcher des mouvements relatifs de l'enveloppe et du cadre, rendus possibles par la suspension du cadre récepteur (10) avec amortissement vibratoire.

4. Boîtier protecteur selon la revendication 3, caractérisé par le fait que la bague d'étanchement intérieure (16) présente, à sa face frontale, une lèvre périphérique d'étanchement externe (17b) inclinée vers l'intérieur, une lèvre d'étanchement interne (17a) de plus faible hauteur étant prévue sur les côtés longitudinaux, à distance de cette lèvre d'étanchement externe (17b), et deux nervures d'étanchement (20) de section triangulaire, s'étendant parallèlement à distance l'une de l'autre, étant prévues sur les petits côtés.

Fig. 1

Fig. 2

Fig. 3

Fig. 4

Fig. 5

Fig. 6